# EUROPEAN PATENT APPLICATION

(11) **EP 3 432 394 A1**
(43) Date of publication of application: **23.01.2019**
(21) Application number: 16914237.9
(22) Date of filing: 26.08.2016
(51) Int. Cl.: H01M 4/74, C22C 11/06, H01M 4/68

(54) **LEAD ACID STORAGE BATTERY, FORGED GRID AND METHOD FOR PRODUCING SAME**

(71) Applicant: Hitachi Chemical Company, Ltd., Chiyoda-ku Tokyo 100-6606 (JP)
(72) Inventor: ASAI Tasuku, Tokyo 100-6606 (JP); KARITANI Kenji, Tokyo 100-6606 (JP)
(74) Representative: Hoffmann Eitle
(86) International application number: PCT/JP2016/075048
(87) International publication number: WO 2018/037563

(57) **Abstract**

The present invention provides, in one aspect, a lead-acid storage battery comprising a cast grid made of a lead alloy as a negative electrode grid, the lead alloy comprising 0.07 to 0.15% by mass of Ca, 0.1 to 2.0% by mass of Sn, and 0.002 to 0.02% by mass of Bi, based on a total mass of the lead alloy.

## Description

### Technical Field

The present invention relates to a lead-acid storage battery, a cast grid, and a method for producing the cast grid.

### Background Art

Lead-acid storage batteries are one type of conventionally used secondary batteries, and are widely used as industrial or consumer secondary batteries due to their reliability, low prices, and the like. In particular, there are many demands for lead-acid storage batteries for automobiles (so-called batteries) or lead-acid storage batteries for backup, such as UPS (Uninterruptible Power Supply), disaster prevention (emergency) radios, and telephones.

As the form of electrode plates (positive electrode plates and negative electrode plates) used in lead-acid storage batteries, the electrode plates of clad-type, paste-type, Tudor-type and the like, are known. Lead-acid storage batteries for backup use paste-type electrode plates, which are able to discharge a large amount of current and suitable for mass production. Paste-type electrode plates have a configuration in which an active material is maintained in a grid, which is an electrode plate substrate, and are produced by filling a paste-like active material in a grid, followed by an aging step and a drying step. The active material is a material that reacts during charging and discharging of the battery, and the grid has a current-collecting function.

A casting method using a mold is mainly used as a method for producing grids. In recent years, there has been a strong demand for reducing the weight of grids. Some grids have only the minimum required mass for operability and strength. On the other hand, misrun of melting metal during casting, blow holes and the like can be problems in the case of producing grids by the casting method. Thus, improvement of strength of grids and castability is required for thinning and weight saving of lead-acid storage batteries.

For example, Patent Documents 1 to 3 propose adjusting the concentrations of tin, silver, bismuth, calcium, and the like, in lead alloys that configure grids within specific ranges.

### Citation List

### Patent Literature

Patent Document 1: Japanese Patent No. 5399272
Patent Document 2: Japanese Patent No. 5140704
Patent Document 3: Japanese Patent No. 4515055

### Summary of Invention

### Technical Problem

However, according to consideration of the present inventors, there is still room for improvement in strength and castability of the grids disclosed in Patent Documents 1 to 3 to apply such grids to, for example, compact power supplies.

Therefore, an object of the present invention is to provide a grid having excellent strength and castability, and a lead-acid storage battery including the grid as a negative electrode grid.

### Solution to Problem

In order to solve the above problems, the present invention provides, in one aspect, a lead-acid storage battery comprising a cast grid made of a lead alloy as a positive electrode grid, the lead alloy comprising 0.07 to 0.15% by mass of Ca, 0.1 to 2.0% by mass of Sn, and 0.002 to 0.02% by mass of Bi, based on a total mass of the lead alloy.

In another aspect of the present invention, the cast grid comprises a grid rib having a minimum cross-sectional area of 1.8 mm² or less.

In another aspect of the present invention, the lead alloy further comprises 0.0001 to 0.002% by mass of Ag and 0.002 to 0.02% by mass of Al, based on the total mass of the lead alloy.

The present invention provides, in another aspect, a cast grid made of a lead alloy comprising 0.07 to 0.15% by mass of Ca, 0.1 to 2.0% by mass of Sn, and 0.002 to 0.02% by mass of Bi, based on a total mass of the lead alloy.

The present invention provides, in another aspect, a method for producing a cast grid, the method comprising casting a lead alloy to obtain a grid, the lead alloy comprising 0.07 to 0.15% by mass of Ca, 0.1 to 2.0% by mass of Sn, and 0.002 to 0.02% by mass of Bi, based on a total mass of the lead alloy.

### Advantageous Effects of Invention

The present invention can provide a grid having excellent strength and castability, and a lead-acid storage battery including the grid as a negative electrode grid. This lead-acid storage battery enables thinning and weight saving.

### Brief Description of Drawings

Fig. 1 is an exploded perspective view showing one embodiment of a lead-acid storage battery.
Fig. 2 is a plan view showing one embodiment of a grid.

### Description of Embodiments

### <Lead-Acid Storage Battery>

The lead-acid storage battery according to the present embodiment is particularly useful when used as a control valve-type lead-acid storage battery. Control valve-type lead acid storage batteries are advantageous in that there is no free electrolyte solution flowing in the batteries, and in that the electrolyte solution is not spilled even when the batteries are horizontally placed. Moreover, control valve-type lead acid storage batteries have the following advantages: that is, even when electrolysis of water occurs during charging, the generation of hydrogen gas is suppressed, the generated oxygen gas is reduced to water by chemical reaction on the surface of the negative electrode plate, and the water is returned to the electrolyte solution; thus, moisture is less likely to be lost, and it is not necessary to check the fluid level and to refill water.

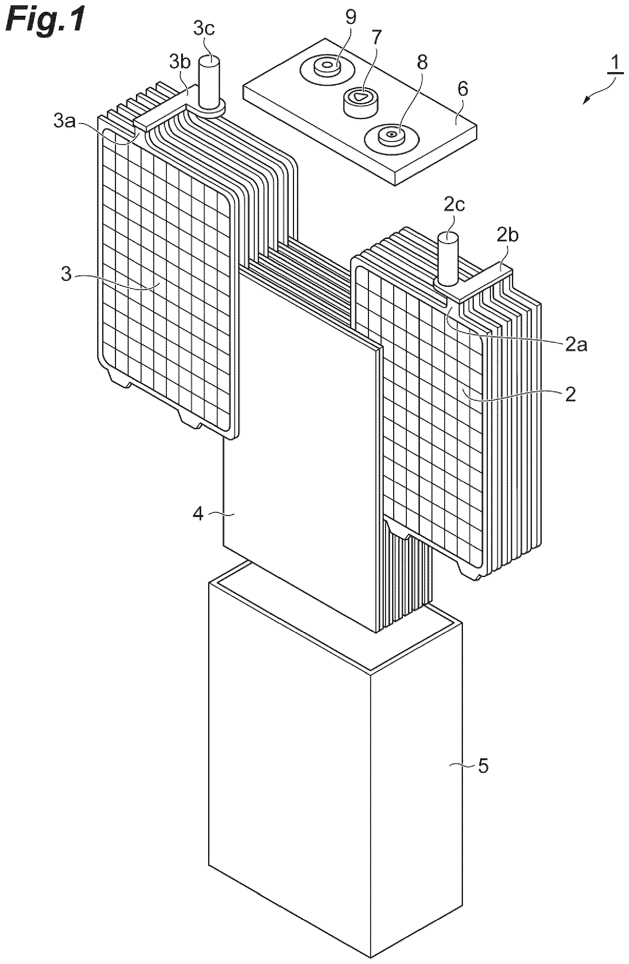

Fig. 1 is an exploded perspective view showing one embodiment of the lead-acid storage battery. As shown in Fig. 1, the lead-acid storage battery 1 comprises a plurality of positive electrode plates 2, a plurality of negative electrode plates 3, a plurality of separators 4, a hollow battery case 5, and a lid 6 for sealing the battery case 5. The lid 6 is provided with a control valve 7 that controls the pressure in the battery case 5, a positive electrode terminal 8 that connects the positive electrode plates 2 to the outside, and a negative electrode terminal 9 that connects the negative electrode plates 3 to the outside.

The positive electrode plates 2 and the negative electrode plates 3 are alternately arranged, and each separator 4 is provided between each positive electrode plate 2 and each negative electrode plate 3. The battery case 5 contains a group of electrode plates consisting of the positive electrode plates 2, the negative electrode plates 3, and the separators 4, which are laminated in the above manner.

Because ear portions 2a provided in the respective positive electrode plates 2 are connected through a strap 2b, the positive electrode plates 2 are electrically connected to each other. Similarly, because ear portions 3a provided in the respective negative electrode plates 3 are connected through a strap 3b, the negative electrode plates 3 are electrically connected to each other. The strap 2b of the positive electrode plates 2 is provided with a positive electrode column 2c for connecting the positive electrode plates 2 to the positive electrode terminal 8. Similarly, the strap 3b of the negative electrode plates 3 is provided with a negative electrode column 3c for connecting the negative electrode plates 3 to the negative electrode terminal 9.

Each positive electrode plate 2 comprises a positive electrode grid and a positive electrode material placed between grid ribs of the positive electrode grid. The negative electrode grid is made of, for example, a lead alloy containing Pb, Ca, Sn, and Al, although it is not particularly limited thereto. The lead alloy may further contain Bi, Ag, and the like. The negative electrode grid is obtained, for example, by casting the lead alloy.

The positive electrode material contains, for example, a positive electrode active material (lead dioxide) and an additive. The positive electrode material may be a paste-like positive electrode material obtained by mixing a lead powder, red lead, dilute sulfuric acid, water, and an additive, although it is not particularly limited thereto. The additive may be, for example, reinforcing short fibers (polypropylene fibers, PET (polyethylene terephthalate), acrylic fibers, and the like) added to increase the strength of the positive electrode material. The 10 HR rated capacity of each positive electrode plate 2 may be, for example, 25 Ah.

The positive electrode plate 2 is obtained by filling the paste-like positive electrode material between the grid ribs of the positive electrode grid, followed by an aging step and a drying step. In the aging step, for example, aging is performed in an environment at a temperature of 75 to 85°C and a relative humidity of 95 to 98% for 4 to 40 hours; subsequently, aging is performed in an environment at 50 to 65°C and a relative humidity of 50% or more for 20 hours or more. In the drying step, drying is performed, for example, in an environment at a temperature of 40 to 65°C for 20 to 40 hours.

Each negative electrode plate 3 comprises a negative electrode grid and a negative electrode material filled between grid ribs of the negative electrode grid. A grid described later is used as the negative electrode grid. The negative electrode material contains, for example, a negative electrode active material (lead) and an additive. The negative electrode material may be a paste-like negative electrode material obtained by mixing a lead powder, dilute sulfuric acid, water, and an additive, although it is not particularly limited thereto. The additive may be barium sulfate (BaSO₄), which functions as a core of lead sulfate (PbSO₄) produced during discharge; an organic compound, such as lignin, which suppresses the crystal growth of negative-electrode active material particles; a carbon material, which imparts electrical conductivity; reinforcing short fibers; or the like. The reinforcing short fibers may be PET, acrylic fibers, and the like, as with the positive electrode plate.

The negative electrode plate 3 is obtained by filling the paste-like negative electrode material between the grid ribs of the negative electrode grid, followed by an aging step and a drying step. In the aging step, aging is performed, for example, in an environment at a temperature of 37 to 43°C and a relative humidity of 92 to 98% for about 24 hours; subsequently, aging is performed, for example, in an environment at a temperature of 37 to 43°C and a relative humidity of 50% or more for 16 hours or more. In the drying step, drying is performed, for example, in an environment at a temperature of 35 to 45°C for 12 to 40 hours.

The separators 4 are, for example, electrolyte solution retainers that retain an electrolyte solution, such as dilute sulfuric acid. Each separator 4 may have a plate-like shape, as shown in Fig. 1, or may be, for example, a bag-like shape capable of wrapping the positive electrode plate in another embodiment. The separators 4 are not particularly limited, as long as they can retain an electrolyte solution while preventing electrical contact between the positive electrode plates 2 and the negative electrode plates 3, and allow the penetration of sulfate ions and hydrogen ions (protons). The separators 4 are preferably AGM (Absorbed Glass Mat) obtained by paper-making of fine glass fibers (cotton). The thickness of each separator (retainer) 4 can be set freely; for example, in a lead-acid storage battery for backup, the thickness of each separator may be 1 to 3 mm. When dilute sulfuric acid is used as an electrolyte solution, the specific gravity (20°C conversion) of the dilute sulfuric acid is preferably 1.25 to 1.35.

The battery case 5 is not particularly limited, as long as it can contain a group of electrode plates consisting of the positive electrode plates 2, the negative electrode plates 3, and the separators 4, and has resistance to electrolyte solutions, such as dilute sulfuric acid. The battery case 5 is made of PP (polypropylene), PE (polyethylene), ABS resin, or the like.

In one embodiment, the internal space of the battery case may be divided into a plurality of cell chambers. In this case, each cell chamber contains a group of electrode plates. An electrode plate group placed in one cell chamber, and an electrode plate group placed in an adjacent cell chamber are connected to each other so that the opposite polar straps are connected to each other, thereby configuring a lead-acid storage battery having a predetermined rated voltage or rated capacity.

The lid 6 is made of, for example, the same material as that of the battery case 5 so as to be able to seal the battery case 5. The lid 6 is attached to the battery case 5, for example, by thermal fusion or bonding using an adhesive.

### (Grid)

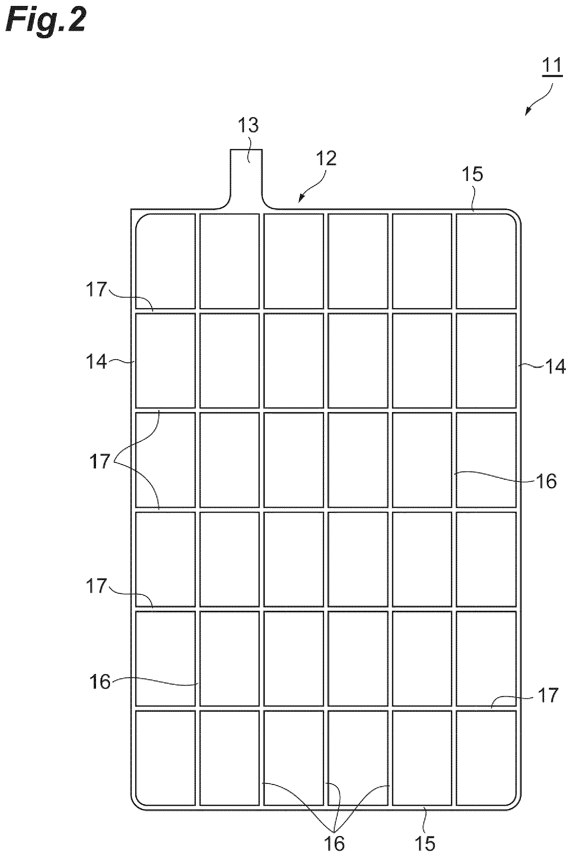

Fig. 2 is a plan view showing one embodiment of the grid. As shown in Fig. 2, the grid 11 comprises a grid portion 12 formed in a grid shape, and an ear portion 13 provided in part of the outer edge of the grid portion 12.

The grid portion 12 comprises a frame rib that forms an approximately rectangular outer frame, and an inner rib placed in a grid shape in the inside of the outer frame. The frame rib has a pair of vertical frame ribs 14 approximately parallel to each other and extending in the longitudinal (vertical) direction, and a pair of horizontal frames ribs 15 approximately parallel to each other and extending in the transverse (horizontal) direction. The inner rib has a plurality of vertical inner ribs 16 approximately parallel to each other and extending in the longitudinal (vertical) direction, and a plurality of horizontal inner ribs 17 approximately parallel to each other and extending in the transverse (horizontal) direction. The ear portion 13 extends in a longitudinal direction from part of the horizontal frame rib 15 to the outside of the outer frame, and has an approximately rectangular plate shape.

The grid 11 is made of a lead alloy containing Pb, Ca, Sn, and Bi. That is, the grid 11 is substantially composed of a lead alloy containing Pb, Ca, Sn, and Bi.

The content of Pb may be 97% by mass or more, 98% by mass or more, or 99% by mass or more, and may be, for example, 99.9% by mass or less, based on the total mass of the lead alloy.

The content of Ca is 0.07 to 0.085% by mass based on the total mass of the lead alloy. The content of Ca is preferably 0.07% by mass or more, more preferably 0.08% by mass or more, and even more preferably 0.09% by mass or more, based on the total mass of the lead alloy, because the grid can have more excellent strength. The content of Ca is preferably 0.15% by mass or less, more preferably 0.12% by mass or less, and even more preferably 0.10% by mass or less, based on the total mass of the lead alloy, because a reduction in battery performance due to recrystallization at high temperatures and the deformation of the grid 11 can be suppressed, and high-temperature durability can be more suitably ensured. The content of Ca may be 0.07 to 0.12% by mass, 0.7 to 0.10% by mass, 0.08 to 0.15% by mass, 0.08 to 0.12% by mass, 0.08 to 0.10% by mass, 0.09 to 0.15% by mass, 0.09 to 0.12% by mass, or 0.09 to 0.10% by mass, based on the total mass of the lead alloy.

The content of Sn is 0.1 to 2.0% by mass based on the total mass of the lead alloy. The content of Sn is preferably 0.1% by mass or more, more preferably 0.5% by mass or more, and even more preferably 1.0% by mass or more, based on the total mass of the lead alloy, because excellent corrosion resistance can be obtained. The content of Sn is preferably 2.0% by mass or less, more preferably 1.8% by mass or less, and even more preferably 1.5% by mass or less, based on the total mass of the lead alloy, because the strength of the grid is more excellent, and the hydrogen generation potential can be maintained. The content of Sn may be 0.1 to 1.8% by mass, 0.1 to 1.5% by mass, 0.5 to 2.0% by mass, 0.5 to 1.8% by mass, 0.5 to 1.5% by mass, 1.0 to 2.0% by mass, 1.0 to 1.8% by mass, or 1.0 to 1.5% by mass, based on the total mass of the lead alloy.

The content of Bi is 0.002 to 0.02% by mass based on the total mass of the lead alloy. The content of Bi is preferably 0.002% by mass or more, more preferably 0.003% by mass or more, and even more preferably 0.004% by mass or more, based on the total mass of the lead alloy, because the strength and castability of the grid are more excellent. The content of Bi is preferably 0.02% by mass or less, more preferably 0.01% by mass or less, and even more preferably 0.006% by mass or less, based on the total mass of the lead alloy, because the hydrogen generation potential is suitably maintained. The content of Bi may be 0.002 to 0.01% by mass, 0.002 to 0.006% by mass, 0.003 to 0.02% by mass, 0.003 to 0.01% by mass, 0.003 to 0.006% by mass, 0.004 to 0.02% by mass, 0.004 to 0.01% by mass, or 0.004 to 0.006% by mass, based on the total mass of the lead alloy.

The lead alloy preferably further contains Ag and/or Al, because Ca and Sn can be stably present in the lead alloy.

The content of Ag is preferably 0.0001% by mass or more, more preferably 0.0002% by mass or more, and even more preferably 0.0004% by mass or more, based on the total mass of the lead alloy, because high-temperature creep characteristics of the grid are excellent. The content of Ag is preferably 0.002% by mass or less, more preferably 0.001% by mass or less, and even more preferably 0.0006% by mass or less, based on the total mass of the lead alloy, because the hydrogen generation potential is suitably maintained. The content of Ag may be 0.0001 to 0.002% by mass, 0.0001 to 0.001% by mass, 0.0001 to 0.0006% by mass, 0.0002 to 0.002% by mass, 0.0002 to 0.001% by mass, 0.0002 to 0.0006% by mass, 0.0004 to 0.002% by mass, 0.0004 to 0.001% by mass, or 0.0004 to 0.0006% by mass, based on the total mass of the lead alloy.

The content of Al is preferably 0.002% by mass or more, more preferably 0.005% by mass or more, and even more preferably 0.008% by mass or more, based on the total mass of the lead alloy, because suppression of oxide gas during casting is excellent. The content of Al is preferably 0.02% by mass or less, more preferably 0.017% by mass or less, and even more preferably 0.015% by mass or less, based on the total mass of the lead alloy, because the alloy structure is highly uniform. The content of Al may be 0.002 to 0.02% by mass, 0.002 to 0.017% by mass, 0.002 to 0.015% by mass, 0.005 to 0.02% by mass, 0.005 to 0.017% by mass, 0.005 to 0.015% by mass, 0.008 to 0.02% by mass, 0.008 to 0.017% by mass, or 0.008 to 0.015% by mass, based on the total mass of the lead alloy.

The present inventors consider that the fact that a grid 11 having, in particular, excellent strength can be obtained using a lead alloy having the above composition is attributable to the following reasons.

That is, first, metal is generally composed of many crystal grains having different atomic arrangement directions, and the disturbed atomic arrangement directions affect the characteristics of metallic materials. Moreover, additional elements and impurity elements of alloys are known to form a crystal nucleus or to tend to gather in the vicinity of the boundary between the crystal grains (crystal grain boundary).

A crystal grain boundary is also present in the grid 11, and corrosion proceeds along the crystal grain boundary (grain boundary corrosion); thus, bonding between the crystal grains is reduced, and volume expansion occurs due to corrosion, so that the grid 11 is likely to extend. Accordingly, the grid 11 of the present embodiment contains, in addition to Pb, predetermined amounts of Ca, Sn, and Bi to thereby reduce the size of crystal grains and increase the network structure of the crystal grain boundary, thereby improving the bonding properties of the crystal grains.

That is, when the lead alloy contains Bi, the mechanical strength of the grid 11 is improved to reduce deformation; however, a region with a high Sn concentration is formed in the crystal grain boundary, and this region selectively induces sliding. In the present embodiment, because the content of each component is adjusted within a predetermined range, a region with a high Sn concentration is reduced, and the progress of sliding in the grain boundary is suppressed; and because the size of crystal grains is reduced, a higher strength lead alloy that is hardly extended at high temperatures, and that has very low vulnerability can be obtained. When the lead alloy further contains Ag and Al, the above working effects can be more suitably obtained.

The lead alloy may further contain inevitable impurities, such as As, Cu, Fe, Mg, Ni, and Zn. The content of inevitable impurities (the total amount of the above components) is preferably 0.02% by mass or less based on the total mass of the lead alloy.

In one embodiment, the lead alloy may be a lead alloy containing 0.07 to 0.15% by mass of Ca, 0.1 to 2.0% by mass of Sn, and 0.002 to 0.02% by mass of Bi, based on the total mass of the lead alloy, and the balance of Pb and inevitable impurities. In another embodiment, the lead alloy may be a lead alloy containing 0.07 to 0.15% by mass of Ca, 0.1 to 2.0% by mass of Sn, 0.002 to 0.02% by mass of Bi, 0.0001 to 0.002% by mass of Ag, and 0.002 to 0.02% by mass of Al, based on the total mass of the lead alloy, and the balance of Pb and inevitable impurities. The preferred content of each component in these embodiments is as described above.

The grid ribs (frame rib and inner rib) preferably have a minimum cross-sectional area of 1.8mm² or less, more preferably 1.7 mm² or less, and even more preferably 1.6 mm² or less, in terms of saving production cost. The grid 11, which is made of a lead alloy having the above-mentioned composition, has excellent strength and castability when the grid ribs have a small minimum cross-sectional area. The minimum cross-sectional area of the grid ribs is preferably 1 mm² or more, more preferably 1.2 mm² or more, and even more preferably 1.4 mm² or more, in terms of obtaining more suitable strength. The minimum cross-sectional area of the grid ribs may be 1 to 1.8 mm², 1 to 1.7 mm², 1 to 1.6 mm², 1.2 to 1.8 mm², 1.2 to 1.7 mm², 1.2 to 1.6 mm², 1.4 to 1.8 mm², 1.4 to 1.7 mm², or 1.4 to 1.6 mm². In the grid 11, the inner rib (one or both of the vertical inner ribs 16 and the horizontal inner ribs 17) preferably has a minimum cross-sectional area within the above range.

The grid 11 described above is a cast grid obtained by casting. Specific examples of the method for producing the grid 11 include a book molding (gravity casting) method, a continuous casting method, a punching method, and the like; preferable among these is a book molding method, which allows easy production and is inexpensive. The book molding method is a method of pouring molten lead into a grid mold, followed by casting.

That is, the method for producing the grid of the present embodiment comprises a casting step of casting a lead alloy containing 0.07 to 0.15% by mass of Ca, 0.1 to 2.0% by mass of Sn, and 0.002 to 0.02% by mass of Bi, based on the total mass of the lead alloy. The preferred composition of the lead alloy (raw material) used in the casting step is the same as the preferred composition of the lead alloy that forms the grid described above; thus, its explanation is omitted herein.

The method for producing the grid of the present embodiment may further comprise, after the casting step, for example, a curing step of performing curing treatment in a curing oven at 70 to 80°C for 12 to 24 hours.

The grid 11 described above is suitably used for a negative electrode plate as a negative electrode grid of a lead-acid storage battery. A thinned and weight saved lead-acid storage battery can be obtained using the grid 11 as a negative electrode grid because the negative electrode has excellent strength and castability when the negative electrode is thin and light.

That is, the grid 11 is suitably used in the production of lead-acid storage batteries. The method for producing a lead-acid storage battery according to one embodiment comprises:
a step of casting a lead alloy containing 0.07 to 0.15% by mass of Ca, 0.1 to 2.0% by mass of Sn, and 0.002 to 0.02% by mass of Bi, based on the total mass of the lead alloy to obtain a negative electrode grid; and
a step of filling a negative electrode material in the negative electrode grid to obtain a negative electrode plate.

The method for producing a lead-acid storage battery may further comprise, for example, a step of alternately laminating a plurality of positive electrode plates and a plurality of negative electrode plates through separators to thereby obtain a group of electrode plates, a step of receiving the group of electrode plates in a battery case, a step of closing the battery case with a lid, a step of pouring an electrolyte solution into the battery case, and a step of performing battery case formation.

### Examples

The present invention is described in more detail below based on Examples; however, the present invention is not limited to the following Examples.

### <Negative Electrode Grid>

Grids (length: 240 mm, width: 140 mm) having the compositions and grid portion minimum cross-sectional areas shown in Table 1 were cast by a book molding method, and cured in a curing oven at 80°C for 16 hours. The composition of the lead alloy after casting was measured by a matrix matching-ICP emission spectral analysis method using iCAP6300 (produced by Thermo Fisher Scientific). Even when the minimum cross-sectional area of the grid portion was changed, the size of the grid (length: 240 mm, width: 140 mm) remained unchanged.

### <Production of Paste-Like Negative Electrode Material>

A lead powder comprising lead monoxide as a main component (900 kg), 2.7 kg of PET fiber (fineness: 2.0 D (denier), fiber length: 3.0 mm), 4.5 kg of barium sulfate, and 1.8 kg of lignin were mixed. After water was added thereto, 100 kg of dilute sulfuric acid was added, and the mixture was kneaded, thereby producing a paste-like negative electrode material. The amount of water added was adjusted so that the paste-like negative electrode material had an almost constant hardness, in consideration of the filling properties of the paste-like negative electrode material in the grids.

### <Production of Negative Electrode Plate>

The negative electrode grids produced in the above manner were each filled with the paste-like negative electrode material, and then subjected to primary drying in an oven adjusted at 130°C for 20 seconds. Subsequently, aging and drying were carried out under the following conditions, thereby producing non-formed paste-type negative electrode plates.
(Aging (primary leaving)) at an ambient temperature of 35 to 55°C for 8 hours
(Aging (secondary leaving)) at an ambient temperature of 65 to 85°C for 12 hours or more

### <Castability>

The castability was evaluated as A when the inner ribs were broken by misrun of melted metal in the cast grid, and as B when were not broken. Table 1 shows the results.

### <Strength Measuring Method>

In the inner ribs (vertical inner ribs and horizontal inner ribs) of each negative electrode grid, an area in the vicinity of a part having a minimum cross-sectional area was cut to prepare a measurement sample having a length of 130 mm. The strength of the measurement sample was measured using Autograph AGS-5kNX (produced by Shimadzu Corporation) at a tension rate of 5 mm/min. The average of the values measured 5 times was used as the strength. Table 1 shows the results.

### <Operability>

For the operability, the strength of each negative electrode grid measured in the above strength measurement was used as an indicator in terms of handling ability of the grid right after the casting and filling ability of the negative electrode materials. A strength of 131 N or more was evaluated as A, a strength of 111 N or more and less than 131 N was evaluated as B, a strength of 91 N or more and less than 111 N was evaluated as C, and a strength of less than 91 N was evaluated as D. Table 1 shows the results.

### <Cost>

The production cost was evaluated based on current product. The production cost was evaluated as A when the cost was less than 0.8 times of that of the current product, as B when 0.8 times or more and less than 1.2 times, as C when 1.2 times or more and less than 1.4 times, and as D when 1.4 times or more. Table 1 shows the results.

### <Comprehensive Evaluation>

The evaluation results of A, B, C and D were converted to 4 points, 3 points, 2 points and 1 point, respectively, in each of the castability, operability and cost evaluations. When the total points were 11 points or more, this case was evaluated as A; when the total points were 10 points, this case was evaluated as B; when the total points were 9 points, this case was evaluated as C; and when the total points were 8 points or less, this case was evaluated as D. Table 1 shows the results.

**[Table 1]**

| Item | Composition of lead alloy of negative electrode grid (% by mass) | | | | | | Minimum cross-sectional area (mm²) | Strength (N) | Castability | Operability | Cost | Comprehensive |
|---|---|---|---|---|---|---|---|---|---|---|---|---|
| | Ca | Sn | Bi | Ag | Al | Pb | | | | | | |
| Example 1 | 0.07 | 0.1 | 0.002 | 0.0005 | 0.01 | Balance | 1.8 | 140 | A | A | B | A |
| Example 2 | 0.07 | 0.1 | 0.02 | 0.0005 | 0.01 | Balance | 1.8 | 135 | A | A | B | A |
| Example 3 | 0.07 | 0.1 | 0.002 | 0.0005 | 0.01 | Balance | 1.4 | 117 | A | B | A | A |
| Example 4 | 0.07 | 0.1 | 0.02 | 0.0005 | 0.01 | Balance | 1.4 | 113 | A | B | A | A |
| Example 5 | 0.15 | 2.0 | 0.002 | 0.0005 | 0.01 | Balance | 1.8 | 149 | A | A | B | A |
| Example 6 | 0.15 | 2.0 | 0.02 | 0.0005 | 0.01 | Balance | 1.8 | 144 | A | A | B | A |
| Example 7 | 0.15 | 2.0 | 0.002 | 0.0005 | 0.01 | Balance | 1.4 | 125 | A | B | A | A |
| Example 8 | 0.15 | 2.0 | 0.02 | 0.0005 | 0.01 | Balance | 1.4 | 120 | A | B | A | A |
| Comparative Example 1 | 0.1 | 1.0 | 0.0005 | 0.0005 | 0.01 | Balance | 1.8 | 88 | B | D | B | D |
| Comparative Example 2 | 0.1 | 2.5 | 0.01 | 0.0005 | 0.01 | Balance | 1.8 | 100 | A | C | B | C |
| Comparative Example 3 | 0.03 | 2.5 | 0.005 | 0.0005 | 0.01 | Balance | 1.8 | 95 | A | C | B | C |
| Comparative Example 4 | 0.2 | 2.5 | 0.002 | 0.0005 | 0.01 | Balance | 1.8 | 99 | B | C | C | D |

It was confirmed that good charging and discharging properties were obtained when lead-acid storage batteries were produced using each of the obtained negative electrode plates in the Examples, an ordinary positive electrode plate and the like.

### Reference Signs List

1: lead-acid storage battery, 2: positive electrode plate, 3: negative electrode plate, 4: separator, 5: battery case, 6: lid, 7: control valve, 8: positive electrode terminal, 9: negative electrode terminal, 11: grid, 12: grid portion, 13: ear portion, 14: vertical frame rib, 15: horizontal frame rib, 16: vertical inner rib, 17: horizontal inner rib.

## Claims

1. A lead-acid storage battery comprising a cast grid made of a lead alloy as a negative electrode grid,
the lead alloy comprising 0.07 to 0.15% by mass of Ca, 0.1 to 2.0% by mass of Sn, and 0.002 to 0.02% by mass of Bi, based on a total mass of the lead alloy.

2. The lead-acid storage battery according to claim 1, wherein the cast grid comprises a grid rib having a minimum cross-sectional area of 1.8 mm² or less.

3. The lead-acid storage battery according to claim 1 or 2, wherein the lead alloy further comprises 0.0001 to 0.002% by mass of Ag and 0.002 to 0.02% by mass of Al, based on the total mass of the lead alloy.

4. A cast grid made of a lead alloy comprising 0.07 to 0.15% by mass of Ca, 0.1 to 2.0% by mass of Sn, and 0.002 to 0.02% by mass of Bi, based on a total mass of the lead alloy.

5. A method for producing a cast grid, the method comprising casting a lead alloy to obtain a grid, the lead alloy comprising 0.07 to 0.15% by mass of Ca, 0.1 to 2.0% by mass of Sn, and 0.002 to 0.02% by mass of Bi, based on a total mass of the lead alloy.
